# EUROPÄISCHE PATENTANMELDUNG

(11) **EP 3 434 335 A1**
(43) Veröffentlichungstag der Anmeldung: **30.01.2019**
(21) Anmeldenummer: 17183761.0
(22) Anmeldetag: 28.07.2017
(51) Int. Cl.: A62C 3/04, C22C 9/00, C22C 9/01, G01G 13/00, G01G 13/02

(54) **APPARAT ZUR HANDHABUNG VON SCHÜTTGUT**

(71) Anmelder: Bayer Aktiengesellschaft, 51373 Leverkusen (DE)
(72) Erfinder: Zimmermann, Werner, 53343 Wachtberg (DE); Hufschmidt, Rolf, 51467 Bergisch Gladbach (DE); Walther, Claus-Diether, 47800 Krefeld (DE)
(74) Vertreter: BIP Patents

(57) **Zusammenfassung**

Die Erfindung betrifft einen Apparat zur Handhabung von Schüttgut, das Feinanteile enthält, die zur Bildung von explosionsfähigen Staub/Luft-Gemischen führen können, wobei der Apparat bewegliche Einbauten im schüttgutberührte Inneren eines Gehäuses umfasst, dadurch gekennzeichnet, dass die beweglichen Einbauten und / oder das produktberührte Innere des Gehäuses aus Aluminiumbronzen bestehen, mit den Aluminiumbronzen ausgekleidet und/oder beschichtet sind.

## Beschreibung

Die Erfindung betrifft eine Lösung für die Handhabung von Schüttgut, das Feinanteile enthält, die zur Bildung von explosionsfähigen Staub/Luft-Gemischen führen können.

Die hier thematisierte Handhabung von Schüttgut bezieht sich ausschließlich auf Vorgänge, die nicht stoffumwandelnd sind (d.h. es erfolgt keine chemische Reaktion) oder bei denen es bestimmungsgemäß nicht zu einer Änderung des Aggregatzustandes kommt.

Unter dem Begriff Schüttgut wird ein körniges oder auch stückiges Gemenge natürlichen und/oder künstlichen Ursprungs verstanden, das in einer schüttfähigen Form vorliegt. Hierunter fallen beispielsweise:
- Lebensmittel
- Kunststoffe
- Düngemittel
- Wirkstoffe
- Arzneimittel in fester Darreichungsform
- Brennstoffe
- Brennbare Stäube

Für die Handhabung von Schüttgut werden u.a. folgende Anlagenteile (im Folgenden mit "Aggregate" bezeichnet) verwendet:
- Apparate zum diskontinuierlichen und kontinuierlichen Agglomerieren,
- Doppelpendelklappen,
- Dosier- und Förderschnecken incl. Dosierwaagen mit innenliegender Förderschnecke,
- Drehklappen,
- Granulatoren,
- Metallabscheider,
- Mischer (dynamische, diskontinuierliche und kontinuierliche),
- Zerkleinerungsaggregate wie z. B. Brecher,
- Mühlen,
- Desagglomierende Aggregate (z.B. Siebmühlen
- Schleifaggregate,
- Rohrkettenförderer,
- Schieber (u.a. Flachschieber),
- Trockner (diskontinuierliche und kontinuierliche),
- Vibrationsböden und -trichter,
- Weichen in Fördersystemen
- Wendelförderer,
- Zellenradschleusen.
- Tablettenpressen

Diese Aufzählung erhebt keinen Anspruch auf Vollständigkeit.

Die o.g. Aggregate umfassen bewegliche Teile wie z.B. Rotoren (Zellenräder), Schieberblätter, Schnecken, Förderwendeln, Rohrketten sowie statische Teile wie z.B. Gehäuse, Leitbleche. Typischerweise werden diese Teile aus metallischen Werkstoffen gefertigt. Neben den metallischen Werkstoffen werden in den o.g. Anlagenteilen sowohl für die beweglichen Teile als auch für die Gehäuse nichtmetallische Werkstoffe (z.B. Kunststoffe, Keramik) verwendet.

In den o.g. Aggregaten kann es sowohl im Normalbetrieb als auch bei Störungen zur Bildung von explosionsfähigen Gemischen durch Stäube kommen. Die Wahrscheinlichkeit des Auftretens eines explosionsfähigen Staub/Luft-Gemisches kann in diesen Aggregaten von "selten und kurzzeitig (entsprechend einer Zone 22)", über "gelegentlich" (entsprechend einer Zone 21) bis zu "ständig, langzeitig oder häufig wiederkehrend" (entsprechend einer Zone 20) reichen (Technische Regeln für Betriebssicherheit -TRBS 2152, Gefährliche explosionsfähige Atmosphäre - Allgemeines - vom 15.03.2006).

Bei Kontakt der beweglichen Teile gegeneinander, gegen Fremdkörper und/oder gegen die Innenwand des betreffenden Gehäuses können zündwirksame mechanische Funken entstehen.

Gem. DIN EN 1127-1 (Explosionsfähige Atmosphären - Explosionsschutz Teil 1 Grundlagen und Methodik, Fassung von 2011) gehören mechanisch erzeugte Funken zu den dort genannten 13 Zündquellenarten. Dort wird beschrieben: "Durch Reib-, Schlag- und Abtragvorgänge, z. B. Schleifen, können aus festen Materialien Teilchen abgetrennt werden, die eine erhöhte Temperatur aufgrund der beim Trennvorgang aufgewendeten Energie annehmen. Bestehen die Teilchen aus oxidierbaren Stoffen, z. B. Eisen oder Stahl, können sie einen Oxidationsprozess durchlaufen, wobei sie noch höhere Temperaturen erreichen. Diese Teilchen (mechanische Funken) können brennbare Gase und Dämpfe sowie bestimmte *(Anmerkung der Verf.: zündempfindliche)* Staub/Luft-Gemische (z. B. Metallstaub/Luft-Gemische) entzünden. Reibung, sogar zwischen einander ähnlichen Eisenmetallen und zwischen bestimmten keramischen Materialien, kann örtliche Erhitzung und Funken ähnlich den Schleiffunken verursachen. Dadurch können explosionsfähige Atmosphären entzündet werden." Dies gilt auch für explosionsfähige Gemische i.S. der Gefahrstoff-Verordnung (Verordnung zum Schutz vor Gefahrstoffen (auch Gefahrstoffverordnung - GefStoffV genannt) vom 01.06.2015).

Bei orts- und zeitgleichem Vorhandensein eines explosionsfähigen Gemischs und eines mechanischen Funkens als Zündquelle kann es zu einer Explosion in dem betreffenden Aggregat ggf. mit Übertragung der Explosion in vor- und nachgeschaltete Anlageteile (z. B. Rohrleitungen, Zufuhr- und Abführorgane) kommen. Durch eine derartige Explosion können Personen- und/oder Sachschäden hervorgerufen werden.

Eine Möglichkeit zur Vermeidung einer Explosion in den o.g. Anlagenteilen besteht darin, das explosionsfähige Gemisch im Inneren der o.g. Anlagenteile zu vermeiden z.B. durch Inertisierung.

Eine weitere Möglichkeit zur Vermeidung einer Explosion besteht in der Vermeidung der Zündquellen.

Es ist dem Fachmann bekannt, dass mechanisch erzeugte Funken (Schlag- und Reibfunken) dadurch vermieden werden können, dass die Relativgeschwindigkeit der beweglichen Einbauten untereinander und/oder zu der Gehäusewandung weniger als 1 m/s beträgt (siehe hierzu DIN EN ISO 80079-36: Dezember 2016 - Kap. 6.4.3-). Dies kann die Nutzung eines Aggregats jedoch erheblich einschränken. Aus verfahrenstechnischen Gründen ist es häufig erforderlich, Relativgeschwindigkeiten von deutlich mehr als 1 m/s zu verwenden.

Wie bereits beschrieben können mechanisch erzeugte Funken entstehen durch den Kontakt der beweglichen Teile im Inneren der Aggregate gegeneinander und/oder gegen die Innenwand des Gehäuses. Darüber hinaus kann das Auftreten von mechanisch erzeugten Funken durch in das Aggregat unbeabsichtigt eingetragene Metallteile erfolgen, die sowohl gegeneinander als auch gegen die beweglichen als auch fixen Teile (incl. Gehäusewand) schlagen können.

Es bestand daher die Aufgabe, eine Lösung zur zuverlässigen Verhinderung einer Explosion im Inneren eines der oben genannten Aggregate bereitzustellen, die eine Nutzung der Anlage bei Relativgeschwindigkeiten gegeneinander bewegter Teile bis zu ≤ 20 m/s ermöglicht. Durch diese Zündquellenvermeidung könnte, falls nicht durch andere Umstände gefordert, die Inertisierung des o.g. Aggregats bzw. vor- und nachgeschalteter Teile der Anlage entfallen.

Aus der Literatur ist bekannt, dass unter bestimmten Voraussetzungen bei einigen Werkstoffen und Paarungen von Werkstoffen zündwirksame mechanische Funken nicht auftreten - siehe hierzu z. B. Henrikus Steen "Handbuch des Explosionsschutzes", Verlag Wiley-VCH, Weinheim 2000, ISBN 3-527-29848-7; Heinz Helmuth Freytag "Handbuch der Raumexplosionen", Verlag Chemie GmbH, Weinheim 1965; BGI 533 (DGUV Information 209-001 - Sicherheit beim Arbeiten mit Handwerkszeugen, Stand: Mai 2007). Dies schlägt sich auch im Regelwerk nieder (siehe hierzu z. B. DIN EN ISO 80079-36: Dezember 2016 - Kap. 6.4.3; DIN EN ISO 80079-36: Dezember 2016 - Kap. 6.4.2.1), nach dem in diesen Fällen mechanische Funken als wirksame Zündquelle nicht zu berücksichtigen sind. Zu diesen Werkstoffen gehören Kupfer (Cu), Zink (Zn), Zinn (Sn), Blei (Pb), einige Messing- (CuZn) und Bronzelegierungen (CuSn).

Ebenfalls ist bekannt, dass für die Herstellung von handgehaltenen Werkzeugen für den Einsatz in explosionsgefährdeten Bereichen der Zone 0 und mit Stoffen der Explosionsgruppe IIC (z.B. Meißel, Hammer, Schraubenschlüssel) Werkstoffe verwendet werden, die als "funkenarm" gelten, hierzu gehört neben den bereits genannten Werkstoffen auch Berylliumbronze (CuBe) (BGI 533 - DGUV Information 209-001 - Sicherheit beim Arbeiten mit Handwerkszeugen, Stand: Mai 2007).

Bisher sind derartige Werkstoffe lediglich als Werkstoffe für handgeführte Werkzeuge verwendet worden.

Zur Lösung der oben genannten Aufgaben werden erfindungsgemäß zur Vermeidung mechanisch erzeugter Funken Aluminiumbronzen (CuAl-Legierungen) als Material für die beweglichen Einbauten in den o.g. Aggregaten und/oder für Gehäuse von o.g. Aggregaten verwendet.

Die Aufgabe wurde durch einen Apparat nach den Ansprüchen 1 bis 4 gelöst.

Bevorzugt werden das produktberührte Innere des Gehäuses oder die beweglichen Einbauten mit den vorgenannten Werkstoffen ausgekleidet und/oder beschichtet. Bevorzugt werden nickelfreie Aluminiumbronzen als Werkstoff für die vorgenannten Anwendungen. Diese waren für diese Anwendung bisher nicht bekannt. Z. B. ist die Eignung für eine spezielle nickelfreie Aluminiumbronze, AMPCO 25 der Fa. AMPCO Metal S.A., die bei der Physikalisch-Technischen Bundesanstalt untersucht und erwiesen worden (Meyer, L., Abschluss des Forschungsvorhabens zur Untersuchung der Zündwirksamkeit von mechanischen Funken beim Einsatz von Bronze, ptb 2015-11). Diese Untersuchungen hinsichtlich der Zündwirksamkeit von mechanisch erzeugten Funken an einer Aluminiumbronze ergaben, dass im relevanten Bereich hinsichtlich Relativgeschwindigkeit und Anpressdruck keine sichtbaren mechanisch erzeugten Funken auftraten. Selbst Ethen/Luft-Gemische, die wesentlich zündempfindlicher als Staub/Luft-Gemische gegenüber mechanisch erzeugten Funken sind, waren nicht zur Entzündung zu bringen. Durch die am Reibstift auftretenden Temperaturen konnten jedoch Wasserstoff/Luftgemische, die noch zündempfindlicher als Ethen-/Luftgemische sind, entzündet werden.

L. Meyer schreibt: "Die Versuche zeigten, dass bei der Reibung der Bronzelegierung auf dem Chromstahl bei Geschwindigkeiten zwischen 1 m/s und 20 m/s und Flächenpressungen zwischen 1 N/mm² und 40 N/mm² keine mechanisch erzeugten Funken beobachtet werden konnten. [...] In Zündversuchen mit Ethen konnten mit den Reibpartnern aus den vorliegenden Werkstoffen keine Zündungen erzeugt werden."

Aus diesem Ergebnis lässt sich ableiten, dass neben den in (DIN EN ISO 80079-36: Dezember 2016 - Kap. 6.4.3; /5/ DIN EN ISO 80079-36: Dezember 2016 - Kap. 6.4.2.1) genannten Werkstoffen (Kupfer (Cu), Zink (Zn), Zinn (Sn), Blei (Pb), einige Messing- (CuZn) und Bronzelegierungen (CuSn)) sich auch Aluminiumbronze als Werkstoff oder Werkstoff zur Auskleidung oder Beschichtung von Aggregaten und/oder für deren bewegte Einbauten hinsichtlich der Vermeidung von wirksamen Zündquellen (hier mechanisch erzeugte Funken und kleine heiße Oberflächen) bis zu Relativgeschwindigkeiten von 20 m/s und Flächenpressungen von 40 N/mm² eignet, und dies bei guten Verschleißeigenschaften. Weiterer Gegenstand der Anmeldung ist die Anwendung von Aluminiumbronze als Material für mindestens einen beweglichen Einbau und / oder das Gehäuse eines Apparats zur Handhabung von Schüttgut.

Der Anwendungsbereich für die Anwendung von Aluminiumbronze als Werkstoff zur Auskleidung oder Herstellung von Gehäusen oder für bewegliche Elemente der o.g. Aggregate umfasst folgende Industriebranchen:
- Pharmazeutische Industrie
- Agrochemische Industrie (incl. Behandlung von Saatgütern)
- Lebensmittelindustrie
- Chemische Industrie
- Kraftwerke
- Kunststoffindustrie
- Holzverarbeitende Industrie

Die vorgeschlagene Anwendung von Aluminiumbronze umfasst die Fertigung der bewegten und/oder statischen Teile der Aggregate zur Handhabung von Schüttgütern, sowohl als Vollmaterial als auch als Überzug (z. B. Beschichtung, Plattierung, Verklebung) auf einen nicht aus Aluminiumbronze gefertigten Grundkörper nach einem der im Stand der Technik üblichen Verfahren, z. B. spanabhebende Formgebung entsprechend der mechanischen Anforderungen.

## Patentansprüche

1. Apparat zur Handhabung von Schüttgut umfassend bewegliche Einbauten im produktberührten Inneren eines Gehäuses, **dadurch gekennzeichnet, dass** die beweglichen Einbauten und / oder das schüttgutberührende Innere des Gehäuses aus einer oder unterschiedlichen Aluminiumbronzen bestehen, mit einer oder unterschiedlichen Aluminiumbronzen ausgekleidet und/oder beschichtet sind.

2. Apparat nach Anspruch 1, wobei das produktberührte Innere des Gehäuses oder die beweglichen Einbauten ausgekleidet und/oder beschichtet.

3. Apparat nach einem der Ansprüche 1 oder 2, wobei die Aluminiumbronze nickelfrei oder nickelarm ist.

4. Apparat nach Anspruch 3, wobei der Aluminiumbronze AMPCO 25 ist.

5. Anwendung von Aluminiumbronze als Material für mindestens einen beweglichen Einbauten und / oder das Gehäuse eines Apparats zur Handhabung von Schüttgut.
